# FASCICULE DE BREVET EUROPEEN

(11) **EP 2 690 796 B1**
(45) Date de publication et mention de la délivrance du brevet: **05.09.2018**
(21) Numéro de dépôt: 13176586.9
(22) Date de dépôt: 16.07.2013
(51) Int. Cl.: H04B 5/00, H04B 17/00, H04B 17/12, H04B 17/18, H04B 17/21, H01Q 1/50

(54) **Procédé de contrôle de l'adaptation d'une antenne connectée à un composant nfc et composant nfc correspondant**
Steuerverfahren zur Anpassung einer Antenne, die mit einem NFC-Komponent verbunden ist, und das entsprechenden NFC-Komponent
Control method of adapting an antenna connected to an NFC component and the corresponding NFC component

(30) Priorité: 23.07.2012 FR 1257123
(43) Date de publication de la demande: 29.01.2014
(73) Titulaire: STMicroelectronics (Rousset) SAS, 13790 Rousset (FR)
(72) Inventeur: Tramoni, Alexandre, 83330 Le Beausset (FR)
(74) Mandataire: Zapalowicz, Francis

(56) Documents cités:
- EP-A1- 2 339 501
- EP-A2- 2 328 254
- EP-A2- 2 450 835
- US-A1- 2010 207 735

## Description

L'invention concerne les composants électroniques connectés à une antenne, en particulier des composants configurés pour échanger des informations avec un dispositif externe via ladite antenne selon un protocole de communication du type sans contact.

De tels composants sont plus simplement appelés, par abus de langage « composants sans contact » et peuvent être par exemple des composants dits « NFC », c'est-à-dire des composants compatibles avec la technologie NFC (« Near Field Communication »).

Le composant NFC peut être par exemple un microcontrôleur NFC.

L'acronyme NFC (« Near Field Communication ») désigne une technologie de communication sans fil haute fréquence faible distance, qui permet des échanges de données entre deux dispositifs sans contact sur une faible distance, par exemple 10 cm.

La technologie NFC est normalisée dans les documents ISO/IEC 18 092 et ISO/IEC 21 481 mais incorpore une variété de normes préexistantes incluant les protocoles type A et type B de la norme ISO/IEC 14 443.

Un microcontrôleur NFC peut être généralement utilisé soit en mode « lecteur » ou en mode « carte », pour dialoguer avec un autre dispositif sans contact, par exemple en utilisant un protocole de communication sans contact tel que le protocole type A de la norme ISO/IEC 14 443.

Dans le mode « lecteur », le composant NFC agit comme un lecteur vis-à-vis du dispositif externe sans contact qui peut être alors une carte ou bien une étiquette. Dans le mode lecteur, le composant NFC peut alors lire le contenu du dispositif externe et écrire des informations dans le dispositif externe.

Dans le mode « carte », le composant NFC se comporte alors comme une carte ou une étiquette et dialogue avec le dispositif externe qui est cette fois-ci un lecteur.

Un microcontrôleur NFC peut être par exemple incorporé dans un téléphone mobile cellulaire, et ce dernier peut être utilisé alors, outre sa fonction téléphonique classique, pour échanger des informations avec le dispositif externe sans contact.

De nombreuses applications sont ainsi possibles, telles que le franchissement de barrière de péage dans les transports (le téléphone mobile agit comme ticket de transport) ou bien des applications de paiement (le téléphone mobile agit comme carte de crédit).

Les composants sans contact, tels que les composants NFC, sont généralement connectés à l'antenne par l'intermédiaire d'un circuit d'adaptation d'impédance dans le but d'optimiser la communication radiofréquence. Et, ces composants externes utilisés dans ce circuit d'adaptation d'impédance doivent être très bien dimensionnés, de façon à assurer le maximum de performance.

Lorsque le composant doit être intégré, des problèmes d'industrialisation peuvent survenir.

Il existe ainsi un besoin de pouvoir contrôler que le circuit d'adaptation d'impédance est correctement réalisé et fonctionne correctement en production, et qu'il n'y a par conséquent pas de problèmes d'adaptation dus par exemple à un problème de soudure de composants.

Le document EP 2 328 254 A2 divulgue un module de contrôle qui effectue uniquement un contrôle de la phase et de l'amplitude du signal émis. Le document EP 2 339 501 A1 divulgue d'analyser la consommation des circuits d'excitation pour détecter si l'antenne est couplée ou non.

Selon un mode de réalisation, il est proposé un composant sans contact, par exemple un composant NFC, capable de détecter *in situ* la qualité de l'adaptation de l'antenne.

Selon un autre mode de réalisation, il est proposé un composant sans contact, tel qu'un composant NFC, capable d'ajuster *in situ* en temps réel, l'adaptation de l'antenne de façon à conserver de très bonnes performances au niveau de la communication radiofréquence.

Selon un mode de réalisation, il est proposé un composant sans contact, par exemple un composant NFC, comportant une première interface utilisable en mode lecteur (interface TX) et destinée à être connectée à une antenne via un circuit externe d'adaptation d'impédance, une deuxième interface utilisable en mode carte et en mode lecteur (interface RX) et destinée à être connectée à l'antenne et à la première interface via le circuit externe d'adaptation d'impédance.

Selon une caractéristique générale de cet aspect, le composant comprend en outre un module interne comportant au moins des premiers moyens de détection configurés pour délivrer un premier signal de détection représentatif de la qualité de l'adaptation de l'antenne en phase, lorsque le circuit externe d'adaptation d'impédance et l'antenne sont effectivement connectés entre la première interface et la deuxième interface ; le module interne étant en outre configuré pour délivrer un signal de contrôle à partir au moins du premier signal de détection.

Lorsque l'on ne s'intéresse qu'à la qualité de l'adaptation de l'antenne en phase, le signal de contrôle est le premier signal de détection.

Cela étant, il est également particulièrement avantageux, selon un autre mode de réalisation, que le module interne comprenne en outre des deuxièmes moyens de détection configurés pour délivrer un deuxième signal de détection représentatif de la qualité de l'adaptation de l'antenne en amplitude lorsque le circuit externe d'adaptation d'impédance et l'antenne sont effectivement connectés entre la première interface et la deuxième interface.

Le module interne est alors en outre configuré pour délivrer le signal de contrôle à partir du premier signal de détection et du deuxième signal de détection.

Selon un mode de réalisation, les premiers moyens de détection (détection de l'adaptation en phase) comprennent un générateur configuré pour générer sur la première interface un premier signal de tension comportant des fronts montants, et un premier bloc de traitement connecté au générateur et à la deuxième interface, pour recevoir au niveau de la deuxième interface un deuxième signal de tension résultant de la génération du premier signal de tension sur la première interface.

Ce premier bloc de traitement comporte
- des moyens d'élaboration configurés pour élaborer des fenêtres temporelles prédéfinies autour respectivement des valeurs maximales du deuxième signal de tension, et
- un premier module de détection configuré pour délivrer un premier signal de détection ayant un premier état lorsque la position d'un front montant du premier signal de tension se situe à l'intérieur d'une fenêtre temporelle.

Selon un mode de réalisation, les moyens d'élaboration comprennent
- un module redresseur, par exemple un pont de diodes, connecté à la deuxième interface et destiné à délivrer un deuxième signal de tension redressé ayant un niveau de tension prédéfini, et
- un comparateur possédant une première entrée connectée à la sortie du module redresseur et une deuxième entrée connectée à la deuxième interface ;
- le premier module de détection comporte alors une porte logique possédant une première entrée connectée à la sortie du comparateur et une deuxième entrée connectée à la sortie du générateur.

En ce qui concerne les deuxièmes moyens de détection (détection de l'adaptation en amplitude), ils comprennent, selon un mode de réalisation, un deuxième comparateur configuré pour comparer la valeur du deuxième signal redressé avec une valeur de référence, et délivrer le deuxième signal de détection ayant un premier état si la valeur du deuxième signal redressé est supérieure à ladite valeur de référence.

Selon un mode de réalisation particulièrement avantageux, le composant comprend en outre des moyens d'ajustement de l'adaptation configurés pour ajuster l'adaptation de l'antenne à partir du signal de contrôle délivré par le module interne.

Ceci permet en quelque sorte d'effectuer un auto-ajustement *in situ* et en temps réel, ce qui permet d'améliorer les performances radiofréquences, d'augmenter l'interopérabilité du composant en évitant une désadaptation pour des produits sans contact ayant une consommation très basse, et ceci permet en outre d'améliorer la consommation du lecteur.

Les moyens d'ajustement comportent par exemple un circuit interne de capacités commutées, connecté entre les deux interfaces et entre les deux bornes de la deuxième interface, et des moyens de commande configurés pour commander la commutation desdites capacités à partir d'au moins un signal pris dans le groupe formé par le signal de contrôle et les deux signaux de détection.

Selon un autre aspect, il est proposé un système comprenant un composant tel que défini ci avant, une antenne connectée à la deuxième interface du composant et un circuit externe d'adaptation de l'impédance connecté à la première interface du composant ainsi qu'à l'antenne.

Selon un autre aspect, il est également proposé un appareil, tel qu'un téléphone mobile cellulaire, comportant un système tel que défini ci avant.

Selon un autre aspect, il est proposé un procédé de contrôle de l'adaptation d'une antenne, connectée via un circuit externe d'adaptation d'impédance à une première interface d'un composant NFC utilisable en mode lecteur et connectée une deuxième interface du composant NFC utilisable en mode carte et en mode lecteur, le procédé comprenant au moins une première élaboration au sein du composant NFC d'un premier signal de détection représentatif de la qualité de l'adaptation de l'antenne en phase et une élaboration d'un signal de contrôle à partir du premier signal de détection.

Selon un mode de mise en oeuvre, ladite première élaboration comprend
- une génération sur la première interface d'un premier signal de tension comportant des fronts montants,
- une réception au niveau de la deuxième interface d'un deuxième signal de tension résultant de la génération du premier signal de tension sur la première interface, et
- une délivrance du premier signal de détection dans un premier état lorsque que la position d'un front montant du premier signal de tension se situe à l'intérieur d'une fenêtre temporelle prédéfinie d'une valeur maximale du deuxième signal de tension.

Selon un mode de mise en oeuvre, le procédé comprend en outre une deuxième élaboration au sein du composant NFC d'un deuxième signal de détection représentatif de la qualité de l'adaptation de l'antenne en amplitude et une troisième élaboration d'un signal de détection global (ou signal de contrôle) représentatif de la qualité de l'adaptation de l'antenne phase et en amplitude à partir du premier signal de détection et du deuxième signal de détection.

Selon un mode de mise en oeuvre, la deuxième élaboration comprend une comparaison de la valeur du deuxième signal de tension redressé avec une valeur de référence et une délivrance du deuxième signal de détection dans un premier état si la valeur du deuxième signal redressé est supérieure à ladite valeur de référence.

Selon un mode de mise en oeuvre, le procédé comprend en outre un ajustement de ladite adaptation de l'antenne à partir du signal de contrôle.

Selon un mode de mise en oeuvre, ledit ajustement comporte une commutation d'au moins une capacité commutée d'un circuit interne de capacités commutées connecté entre les deux interfaces et entre les deux bornes de la deuxième interface du composant NFC, ladite commutation étant commandée à partir d'au moins un signal pris dans le groupe formé par le signal de contrôle et les deux signaux de détection.

D'autres avantages et caractéristiques de l'invention apparaîtront à la description détaillée de modes de réalisation et de mise en oeuvre, nullement limitatifs, et des dessins annexés sur lesquels :

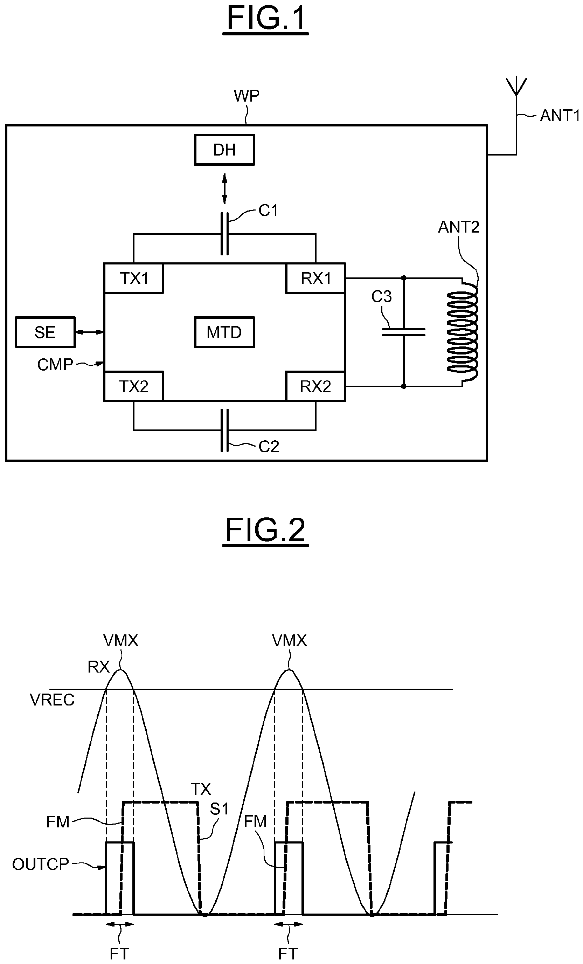

- les figures 1 à 5 illustrent schématiquement différents modes de réalisation d'un composant NFC selon l'invention et différents modes de mise en oeuvre du procédé selon l'invention.

Sur la figure 1, la référence WP désigne ici un appareil de communication, par exemple un téléphone mobile cellulaire, équipé d'une antenne ANT1 pour l'établissement des communications téléphoniques.

Dans le cas présent, le téléphone WP comporte également un système NFC comportant un composant CMP sans contact du type NFC, par exemple un microcontrôleur NFC. Le microcontrôleur CMP possède une première interface formée ici de deux contacts TX1, TX2 utilisable en mode lecteur et une deuxième interface formée ici de deux autres contacts RX1, RX2, utilisable en mode lecteur et en mode carte.

A cet égard, le composant CMP peut être équipé d'un commutateur interne permettant de court-circuiter les bornes TX1 et TX2 pour un fonctionnement en mode carte, ou de ne pas court-circuiter les bornes pour autoriser un fonctionnement en mode lecteur.

Entre les contacts TX1 et RX1 est connecté un condensateur C1. De même, un condensateur C2 est connecté entre les contacts TX2 et RX2 et un condensateur C3 est connecté entre les contacts RX1 et RX2 de la deuxième interface.

Enfin, une antenne ANT2 utilisable pour la communication sans contact avec un dispositif externe, est connectée entre les deux bornes RX1, RX2 de la deuxième interface.

Les condensateurs C1, C2, C3 forment ici un circuit externe d'adaptation d'impédance.

De façon à avoir un fonctionnement optimisé, le composant CMP forme avec l'antenne et le circuit externe d'adaptation d'impédance un circuit résonant ayant une fréquence de résonance f égale à la fréquence de porteuse, par exemple 13,56 MHz dans le cas d'un protocole de communication type A ou B défini dans la norme ISO/IEC 14 443.

Cela étant, dans le cas d'un protocole de transmission type A, des fréquences de résonance contenues dans une plage de plus ou moins 15% autour de la fréquence de porteuse peuvent être considérées comme des fréquences de résonance acceptables.

Outre les moyens classiques et connus formant la structure interne d'un microcontrôleur NFC, qui peuvent être par exemple ceux du microcontrôleur commercialisé par la société STMicroelectronics sous la référence ST 21 NFC A, le composant CMP comporte ici un module interne MTD dont on reviendra plus en détail ci après sur la structure et la fonctionnalité, et qui est destiné à délivrer un signal de contrôle représentatif de la qualité de l'adaptation de l'antenne en phase et/ou en amplitude.

Enfin, comme il est classique dans certains cas, le microcontrôleur NFC CMP dialogue avec un dispositif hôte DH, tel qu'un microprocesseur, destiné notamment à gérer l'interface utilisateur, ainsi qu'avec un élément sécurisé SE (Secure Element), ou UICC. UICC tel que défini dans le document ETSI TR 102 216 V3.0.0 (09 2003), qui n'est ni une abréviation ni un acronyme, désigne une carte à puce conforme aux spécifications écrites et maintenues par le comité technique ETSI SCP (Smart Card Plateform).

La figure 2 illustre schématiquement un cas où l'adaptation de l'antenne en phase est correcte.

Plus précisément, dans le cas d'un protocole de communication utilisant une fréquence de porteuse de 13,56 MHz, lorsque l'on émet sur la première interface TX1, TX2 un premier signal de tension S1 en créneau, ayant des fronts montants FM séparés de 70 nanosecondes (correspondant à la fréquence de 13, 56 MHz), on reçoit au niveau de la deuxième interface RX1, RX2, compte tenu de la présence du circuit externe d'adaptation C1-C3 et de l'antenne ANT2, un deuxième signal de tension S2, sinusoïdal, dont les pics ou valeurs maximales VMX sont également espacés de 70 nanosecondes (correspondant à la fréquence de porteuse de 13, 56 MHz).

Une adaptation en phase parfaite de l'antenne se traduit par un alignement de fronts montants FM du premier signal S1 avec les valeurs maximales respectives VMX du signal S2.

Cela étant, on considère ici que l'adaptation en phase est correcte si les fronts montants FM du premier signal S1 se situent à l'intérieur de fenêtres temporelles FT autour respectivement des valeurs maximales VMX du deuxième signal S2.

Dans l'exemple décrit ici, comme on le verra plus en détail ci après, la largeur de la fenêtre est définie par la valeur d'une tension VREC correspondant à la valeur de tension du deuxième signal S2 redressé.

Plus la valeur VREC est élevée par rapport à la valeur maximale VMX, plus la fenêtre FT est étroite, et plus la valeur VREC est faible par rapport à la valeur maximale VMX, plus la fenêtre FT est large.

En pratique, on choisit par exemple une fenêtre FT ayant une largeur de 10 nanosecondes, ce qui correspond à une valeur maximale VMX de l'ordre de 10 à 12 volts, et à une valeur VREC de l'ordre de 9 à 11 volts.

Et, on va élaborer au sein du composant NFC un premier signal de détection, représentatif de la qualité de l'adaptation de l'antenne en phase. Et, comme on va le voir plus en détail ci-après, ce premier signal de détection est un signal numérique qui a un premier état (par exemple la valeur logique « 1 ») lorsque la position d'un front montant FM du premier signal de tension S1 se situe à l'intérieur de la fenêtre temporelle FT correspondante, correspondant alors à une adaptation correcte en phase.

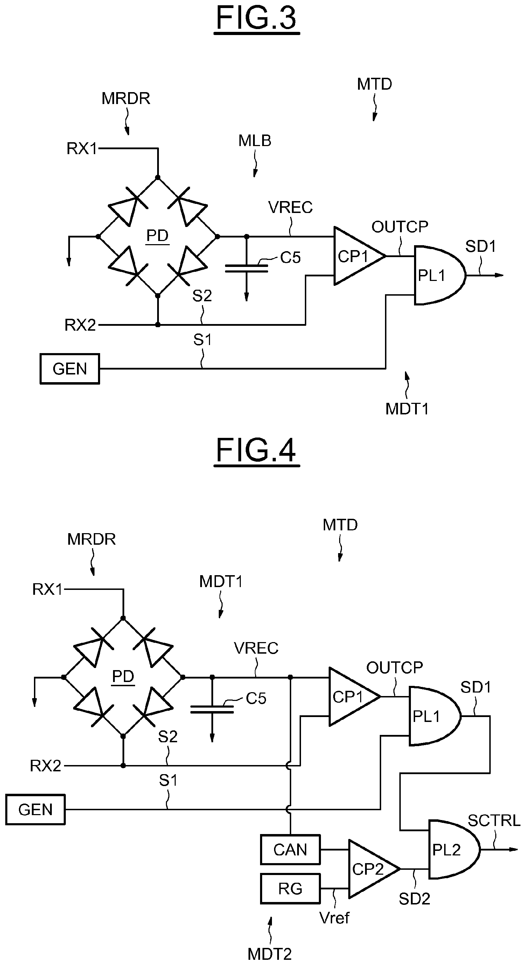

En pratique, les premiers moyens de détection MDT1, qui délivrent le premier signal de détection SD1, peuvent être réalisés comme illustré schématiquement sur la figure 3.

Plus précisément, les premiers moyens de détection MDT1 comportent un générateur GEN délivrant le premier signal de tension S1 sur la première interface TX1, TX2.

Les premiers moyens de détection MDT1 comportent également des moyens d'élaboration MLB configurés pour élaborer les fenêtres temporelles prédéfinies FT.

Ces moyens d'élaboration MLB comportent ici un module redresseur MDR formé par un pont de diodes PD connectées entre les deux contacts RX1, RX2 de la deuxième interface, et dont la sortie est connectée à un condensateur C5.

Les moyens d'élaboration MLB comportent également un comparateur CP1 possédant une première entrée connectée à la sortie du module redresseur MRDR pour recevoir le deuxième signal de tension redressé VREC, et une deuxième entrée connectée à la deuxième interface (ici au contact RX2) pour recevoir le deuxième signal S2 non redressé.

On voit donc, comme illustré sur la figure 2, que la sortie OUTCP du condensateur CP1 est à « 1 » lorsque le signal S2 se situe au dessus de la tension redressée VREC, ce qui permet effectivement de définir la fenêtre temporelle.

Les premiers moyens de détection MDT1 comportent également ici une porte logique ET, référencée PL1, possédant une entrée connectée à la sortie du comparateur CP1 et une autre entrée connectée à la sortie du générateur GEN.

Cette porte logique PL1 forme ici un module de détection configuré pour délivrer le premier signal de détection SD1.

Et, ce premier signal de détection SD1 a un premier état (valeur logique 1) lorsque les deux entrées de la porte logique PL1 sont à « 1 », ce qui correspond à un front montant FM du premier signal de tension S1 situé à l'intérieur d'une fenêtre temporelle ST.

Le mode de réalisation illustré sur la figure 4 permet de détecter à la fois une bonne adaptation de l'antenne en phase et une bonne adaptation de l'antenne en amplitude.

En effet, l'amplitude du deuxième signal de tension redressé VREC dépend de l'antenne utilisée. Par ailleurs, si un défaut de soudure apparaît au niveau d'un composant du circuit externe d'adaptation d'antenne, cela peut se traduire par une baisse du niveau de signal S2 et par conséquent du niveau du signal S2 redressé, c'est-à-dire la tension VREC.

C'est la raison pour laquelle il est prévu, au sein du module interne MTD, des deuxièmes moyens de détection MDT2, configurés pour délivrer un deuxième signal de détection SD2 représentatif de la qualité de l'adaptation de l'antenne en amplitude.

L'élaboration de ce deuxième signal de détection SD2 comprend une comparaison de la valeur du deuxième signal de tension redressée VREC avec une valeur de référence Vref. Le deuxième signal de détection SD2 aura alors un premier état (par exemple valeur logique « 1 ») si la valeur du deuxième signal redressée VREC est supérieure à la valeur de référence Vref, correspondant à une adaptation correcte en amplitude.

A titre indicatif, Vref pourra être choisie de l'ordre de 85% de VREC.

En pratique, les deuxièmes moyens de détection MDT2 peuvent comprendre, comme illustré sur la figure 4, un registre RG stockant la valeur de référence Vref ainsi qu'un convertisseur analogique numérique CAN relié à la sortie du module redresseur MRDR et destiné à numériser le deuxième signal de tension redressée VREC.

Un deuxième comparateur CP2 possède une première entrée reliée à la sortie du convertisseur CAN et une deuxième entrée reliée à la sortie du registre RG.

La sortie du comparateur CP2 délivre le deuxième signal de détection SD2.

Il est également possible, comme illustré sur la figure 4, de délivrer un signal de contrôle SCTRL, représentatif de la qualité de l'adaptation de l'antenne à la fois en amplitude et phase.

Ce signal de contrôle SCTRL est élaboré à partir des signaux SD1 et SD2. En pratique, des moyens de sortie, formés ici par une porte logique ET, référencée PL2, reçoivent d'une part le signal SD1 et d'autre part le signal SD2 et délivrent le signal de contrôle SCTRL.

Lorsque les deux signaux SD1 et SD2 sont dans leur premier état (valeur logique « 1 » par exemple), le signal SCTRL est alors également dans un premier état (valeur logique « 1 »).

Il est par ailleurs particulièrement avantageux de pouvoir ajuster l'adaptation de l'antenne *in situ,* en temps réel, pour tenir compte éventuellement des dispersions des composants du circuit externe d'adaptation et pour tenir compte éventuellement d'une charge du composant par un produit externe situé dans le champ de l'antenne.

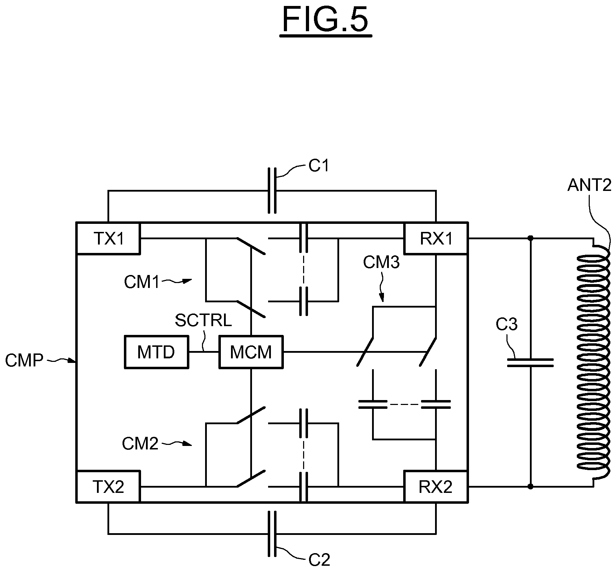

Plus précisément, comme illustré sur la figure 5, le composant CMP comporte des moyens d'ajustement comportant ici un circuit interne de capacités commutées. Ce circuit interne de capacités commutées comporte un premier jeu CM1 et un deuxième jeu CM2 de capacités commutées connectés entre les deux interfaces RX1, TX1 et RX2, TX2, ainsi qu'un troisième jeu de capacités commutées CM3 connecté entre les deux bornes RX1 et RX2 de la deuxième interface.

Ces différents jeux de capacités commutées sont commandés par des moyens de commande et, la commutation des différentes capacités peut être effectuée à partir de la valeur du signal de contrôle STRL délivré par le module interne MTD.

La commutation de l'une au moins des capacités du jeu CM3 va être prépondérant pour un ajustement en phase, tandis que la commutation de l'une au moins des capacités des jeux CM1 et CM2 va être prépondérant pour un ajustement en amplitude.

Une première solution pour effectuer cet ajustement peut consister à tester la commutation des différentes capacités commutées dans un ordre prédéfini à chaque fois que la valeur du signal SCTRL est égale à « 0 », et de stopper la procédure dès que le signal SCTRL repasse à 1. Une autre solution pourrait consister à analyser à la fois le signal SCTRL et également les signaux SD1 et SD2 pour déterminer d'où vient la mauvaise adaptation et d'ajuster la procédure de commutation des capacités en conséquence.

## Revendications

1. Composant NFC, comportant une première interface (TX1, TX2) utilisable en mode lecteur et destinée à être connectée à une antenne (ANT2) via un circuit externe d'adaptation d'impédance (C1-C3), une deuxième interface (RX1, RX2) utilisable en mode carte et en mode lecteur et destinée à être connectée à l'antenne (ANT2) et à la première interface (TX1, TX2) via le circuit externe d'adaptation d'impédance (C1-C3), **caractérisé en ce qu'**il comprend en outre un module interne (MTD) comportant au moins des premiers moyens de détection (MDT1) configurés pour délivrer un premier signal de détection (SD1) représentatif de la qualité de l'adaptation de l'antenne en phase lorsque le circuit externe d'adaptation d'impédance (C1-C3) et l'antenne (ANT2) sont effectivement connectés entre la première interface (TX1, TX2) et la deuxième interface (RX1, RX2), le module interne (MTD) étant en outre configuré pour délivrer un signal de contrôle (SCTRL) à partir au moins du premier signal de détection (SD1).

2. Composant NFC selon la revendication 1, dans lequel les premiers moyens de détection (MDT1) comprennent un générateur (GEN) configuré pour générer sur la première interface un premier signal de tension (S1) comportant des fronts montants (FM), et un premier bloc de traitement connecté au générateur et à la deuxième interface, pour recevoir au niveau de la deuxième interface un deuxième signal de tension (S2) résultant de la génération du premier signal de tension sur la première interface, et comportant des moyens d'élaboration (MLB) configurés pour élaborer des fenêtres temporelles prédéfinies (FT) autour respectivement des valeurs maximales (VMX) du deuxième signal de tension (S2), et un premier module de détection configuré pour délivrer le premier signal de détection ayant un premier état lorsque que la position d'un front montant du premier signal de tension se situe à l'intérieur d'une fenêtre temporelle.

3. Composant NFC selon la revendication 2, dans lequel les moyens d'élaboration (MLB) comprennent un module redresseur (MRDR) connecté à la deuxième interface et destiné à délivrer un deuxième signal de tension redressé (VREC) ayant un niveau de tension prédéfini, et un comparateur (CP1) possédant une première entrée connectée à la sortie du module redresseur et une deuxième entrée connectée à la deuxième interface, et le module de détection comporte une porte logique (PL1) possédant une première entrée connectée à la sortie du comparateur et une deuxième entrée connectée à la sortie du générateur.

4. Composant NFC selon l'une des revendications précédentes, dans lequel le module interne comprend en outre des deuxièmes moyens de détection (MDT2) configurés pour délivrer un deuxième signal de détection (SD2) représentatif de la qualité de l'adaptation de l'antenne en amplitude lorsque le circuit externe d'adaptation d'impédance et l'antenne sont effectivement connectés entre la première interface et la deuxième interface, le module interne étant en outre configuré pour délivrer le signal de contrôle (SCTRL) à partir du premier signal de détection (SD1) et du deuxième signal de détection (SD2).

5. Composant NFC selon les revendications 3 et 4, dans lequel les deuxièmes moyens de détection (MDT2) comprennent un deuxième comparateur (CP2) configuré pour comparer la valeur du deuxième signal redressé avec une valeur de référence et délivrer le deuxième signal de détection ayant un premier état si la valeur du deuxième signal redressé est supérieure à ladite valeur de référence.

6. Composant NFC selon la revendication 4 ou 5, dans lequel le module interne comprend des moyens de sortie (PL2) configurés pour délivrer le signal de contrôle avec un premier état lorsque le premier signal de détection et le deuxième signal de détection sont tous les deux dans leur premier état.

7. Composant NFC selon l'une des revendications précédentes, comprenant en outre des moyens d'ajustement (MCM, CM1-CM3) de ladite adaptation configurés pour ajuster l'adaptation de l'antenne à partir du signal de contrôle délivré par ledit module interne.

8. Composant NFC selon la revendication 7, dans lequel les moyens d'ajustement comportent un circuit interne de capacités commutées (CM1-CM3) connecté entre les deux interfaces et entre les deux bornes de la deuxième interface, et des moyens de commande (MCM) configurés pour commander la commutation desdites capacités à partir d'au moins un signal pris dans le groupe formé par le signal de contrôle et les deux signaux de détection.

9. Système, comprenant un composant NFC (CMP) selon l'une des revendications 1 à 8, une antenne connectée à la deuxième interface du composant, et un circuit externe d'adaptation d'impédance connecté à la première interface du composant ainsi qu'à l'antenne.

10. Appareil, tel qu'un téléphone mobile cellulaire, comportant un système selon la revendication 9.

11. Procédé de contrôle de l'adaptation d'une antenne, connectée via un circuit externe d'adaptation d'impédance (C1-C3) à une première interface (TX1, TX2) d'un composant NFC utilisable en mode lecteur et connectée une deuxième interface (RX1, RX2) du composant NFC utilisable en mode carte et en mode lecteur, le procédé comprenant au moins une première élaboration au sein du composant NFC d'un premier signal de détection (SD1) représentatif de la qualité de l'adaptation de l'antenne en phase et une élaboration d'un signal de contrôle (SCTRL).

12. Procédé selon la revendication 11, dans lequel ladite première élaboration comprend une génération sur la première interface d'un premier signal de tension (S1) comportant des fronts montants, une réception au niveau de la deuxième interface d'un deuxième signal de tension (S2) résultant de la génération du premier signal de tension sur la première interface, et une délivrance du premier signal de détection (SD1) dans un premier état lorsque que la position d'un front montant du premier signal de tension se situe à l'intérieur d'une fenêtre temporelle prédéfinie d'une valeur maximale du deuxième signal de tension.

13. Procédé selon la revendication 11 ou 12, comprenant en outre une deuxième élaboration au sein du composant NFC d'un deuxième signal de détection (SD2) représentatif de la qualité de l'adaptation de l'antenne en amplitude, le signal de contrôle (SCTRL) étant élaboré à partir du premier signal de détection (SD1) et du deuxième signal de détection (SD2), le signal de contrôle (SCTRL) étant représentatif de la qualité de l'adaptation de l'antenne en phase et en amplitude.

14. Procédé selon la revendication 13, dans lequel la deuxième élaboration comprend une comparaison de la valeur du deuxième signal de tension redressé (VERC) avec une valeur de référence (Vref) et une délivrance du deuxième signal de détection dans un premier état si la valeur du deuxième signal redressé est supérieure à ladite valeur de référence.

15. Procédé selon l'une des revendications 11 à 14, comprenant en outre un ajustement de ladite adaptation de l'antenne à partir d'au moins un signal pris dans le groupe formé par le signal de contrôle et les deux signaux de détection.

16. Procédé selon la revendication 15, dans lequel ledit ajustement comporte une commutation d'au moins une capacité commutée d'un circuit interne de capacités commutées connecté entre les deux interfaces et entre les deux bornes de la deuxième interface du composant NFC, ladite commutation étant commandée à partir d'au moins un signal pris dans le groupe formé par le signal de contrôle et les deux signaux de détection.

## Patentansprüche

1. NFC-Komponente, umfassend eine erste Schnittstelle (TX1, TX2), die im Lesemodus verwendbar und dazu bestimmt ist, an eine Antenne (ANT2) über eine externe Impedanzanpassungsschaltung (C1-C3) angeschlossen zu werden, eine zweite Schnittstelle (RX1, RX2), die im Kartenmodus und im Lesemodus verwendbar und dazu bestimmt ist, an die Antenne (ANT2) und an die erste Schnittstelle (TX1, TX2) über die externe Impedanzanpassungsschaltung (C1-C3) angeschlossen zu werden, **dadurch gekennzeichnet, dass** sie ferner ein internes Modul (MTD) umfasst, umfassend mindestens erste Erfassungsmittel (MDT1), die eingerichtet sind, um ein erstes Erfassungssignal (SD1) zu liefern, das für die Qualität der Anpassung der Antenne in Phase, wenn die externe Impedanzanpassungsschaltung (C1-C3) und die Antenne (ANT2) zwischen der ersten Schnittstelle (TX1, TX2) und der zweiten Schnittstelle (RX1, RX2) tatsächlich angeschlossen sind, repräsentativ ist, wobei das interne Modul ferner eingerichtet ist, um ein Kontrollsignal (SCTRL) auf Basis mindestens des ersten Erfassungssignals (SD1) zu liefern.

2. NFC-Komponente nach Anspruch 1, bei der die ersten Erfassungsmittel (MDT1) einen Generator (GEN), der eingerichtet ist, um an der ersten Schnittstelle ein erstes Spannungssignal (S1), umfassend aufsteigende Flanken (FM), zu erzeugen, und einen ersten Bearbeitungsblock umfasst, der an den Generator und an die zweite Schnittstelle angeschlossen ist, um im Bereich der zweiten Schnittstelle ein zweites Spannungssignal (S2), das sich aus der Erzeugung des ersten Spannungssignals an der ersten Schnittstelle ergibt, zu empfangen, und umfassend Ausarbeitungsmittel (MLB), die eingerichtet sind, um vordefinierte Zeitfenster (FT) jeweils um die Maximalwerte (VMX) des zweiten Spannungssignals (S2) auszuarbeiten, und ein erstes Erfassungsmodul, das eingerichtet ist, um das erste Erfassungssignal zu liefern, das einen ersten Zustand hat, wenn die Position einer aufsteigenden Flanke des ersten Spannungssignals innerhalb eines Zeitfensters verläuft.

3. NFC-Komponente nach Anspruch 2, bei der die Ausarbeitungsmittel (MLB) ein Gleichrichtermodul (MRDR), das an die zweite Schnittstelle angeschlossen und dazu bestimmt ist, ein zweites gleichgerichtetes Spannungssignal (VREC) mit einem vordefinierten Spannungsniveau zu liefern, und einen Komparator (CP1) umfasst, der einen ersten Eingang, der an den Ausgang des Gleichrichtermoduls angeschlossen ist, und einen zweiten Eingang, der an die zweite Schnittstelle angeschlossen ist, besitzt, und das Erfassungsmodul ein logisches Gatter (PL1) umfasst, das einen ersten Eingang, der an den Ausgang des Komparators angeschlossen ist, und einen zweiten Eingang, der an den Ausgang des Generators angeschlossen ist, besitzt.

4. NFC-Komponente nach einem der vorhergehenden Ansprüche, bei der das interne Modul ferner zweite Erfassungsmittel (MDT2) umfasst, die eingerichtet sind, um ein zweites Erfassungssignal (SD2) zu liefern, das für die Qualität der Anpassung der Antenne in Amplitude, wenn die externe Impedanzanpassungsschaltung und die Antenne tatsächlich zwischen der ersten Schnittstelle und der zweiten Schnittstelle angeschlossen sind, repräsentativ ist, wobei das interne Modul ferner eingerichtet ist, um das Kontrollsignal (SCTRL) auf Basis des ersten Erfassungssignals (SD1) und des zweiten Erfassungssignals (SD2) zu liefern.

5. NFC-Komponente nach den Ansprüchen 3 und 4, bei der die zweiten Erfassungsmittel (MDT2) einen zweiten Komparator (CP2) umfassen, um den Wert des zweiten gleichgerichteten Signals mit einem Referenzwert zu vergleichen und das zweite Erfassungssignal zu liefern, das einen ersten Zustand hat, wenn der Wert des zweiten gleichgerichteten Signals größer als der Referenzwert ist.

6. NFC-Komponente nach Anspruch 4 oder 5, bei der das interne Modul Ausgangsmittel (PL2) umfasst, die eingerichtet sind, um das Kontrollsignal mit einem ersten Zustand zu liefern, wenn das erste Erfassungssignal und das zweite Erfassungssignal beide in ihrem ersten Zustand sind.

7. NFC-Komponente nach einem der vorhergehenden Ansprüche, ferner umfassend Einstellungsmittel (MCM, CM1-CM3) der Anpassung, die eingerichtet sind, um die Anpassung der Antenne auf Basis des von dem internen Modul gelieferten Kontrollsignals einzustellen.

8. NFC-Komponente nach Anspruch 7, bei der die Einstellungsmittel eine interne Schaltung mit geschalteten Kapazitäten (CM1-CM3), die zwischen den zwei Schnittstellen und zwischen den zwei Klemmen der zweiten Schnittstelle angeschlossen ist, und Steuermittel (MCM) umfassen, die eingerichtet sind, um das Umschalten der Kapazitäten auf Basis mindestens eines Signals aus der Gruppe, die von dem Kontrollsignal und den zwei Erfassungssignalen gebildet ist, zu steuern.

9. System, umfassend eine NFC-Komponente (CMP) nach einem der Ansprüche 1 bis 8, eine Antenne, die an die zweite Schnittstelle der Komponente angeschlossen ist, und eine externe Impedanzanpassungsschaltung, die an die erste Schnittstelle der Komponente sowie an die Antenne angeschlossen ist.

10. Gerät, wie ein Mobiltelefon, umfassend ein System nach Anspruch 9.

11. Verfahren zur Kontrolle der Anpassung einer Antenne, die über eine externe Impedanzanpassungsschaltung (C1-C3) an eine erste Schnittstelle (TX1, TX2) einer NFC-Komponente, die im Lesemodus verwendbar ist, und an eine zweite Schnittstelle (RX1, RX2) der NFC-Komponente, die im Kartenmodus und im Lesemodus verwendbar ist, angeschlossen ist, wobei das Verfahren mindestens eine erste Ausarbeitung innerhalb der NFC-Komponente eines ersten Erfassungssignals (SD1), das für die Qualität der Anpassung der Antenne in Phase repräsentativ ist, und eine Ausarbeitung eines Kontrollsignals (SCTRL) umfasst.

12. Verfahren nach Anspruch 11, bei dem die erste Ausarbeitung an der ersten Schnittstelle eine Erzeugung eines ersten Spannungssignals (S1), umfassend aufsteigende Flanken, im Bereich der zweiten Schnittstelle einen Empfang eines zweiten Spannungssignals (S2), das sich aus der Erzeugung des ersten Spannungssignals an der ersten Schnittstelle ergibt, und eine Lieferung des ersten Erfassungssignals (SD1) in einem ersten Zustand umfasst, wenn die Position einer aufsteigenden Flanke des ersten Spannungssignals innerhalb eines vordefinierten Zeitfensters eines Maximalwerts des Spannungssignals liegt.

13. Verfahren nach Anspruch 11 oder 12, ferner umfassend eine zweite Ausarbeitung innerhalb der NFC-Komponente eines zweiten Erfassungssignals (SD2), das für die Qualität der Anpassung der Antennen in Amplitude repräsentativ ist, wobei das Kontrollsignal (SCTRL) auf Basis des ersten Erfassungssignals (SD1) und des zweiten Erfassungssignals (SD2) ausgearbeitet ist, wobei das Kontrollsignal (SCTRL) für die Qualität der Anpassung der Antenne in Phase und Amplitude repräsentativ ist.

14. Verfahren nach Anspruch 13, bei dem die zweite Ausarbeitung einen Vergleich des Werts des zweiten gleichgerichteten Spannungssignals (VERC) mit einem Referenzwert (Vref) und eine Lieferung des zweiten Erfassungssignals in einem ersten Zustand, wenn der Wert des gleichgerichteten zweiten Signals größer als der Referenzwert ist, umfasst.

15. Verfahren nach einem der Ansprüche 11 bis 14, ferner umfassend eine Einstellung der Anpassung der Antenne auf Basis mindestens eines Signals aus der Gruppe, die von dem Kontrollsignal und den zwei Erfassungssignalen gebildet ist.

16. Verfahren nach Anspruch 15, bei dem die Einstellung eine Umschaltung mindestens einer geschalteten Kapazität einer internen Schaltung von geschalteten Kapazitäten umfasst, die zwischen den zwei Schnittstellen und zwischen den zwei Klemmen der zweiten Schnittstelle der NFC-Komponente angeschlossen ist, wobei die Umschaltung auf Basis mindestens eines Signals aus der Gruppe, die von dem Kontrollsignal und den zwei Erfassungssignalen gebildet ist, gesteuert wird.

## Claims

1. NFC component, comprising a first interface (TX1, TX2) which can be used in reader mode and is intended to be connected to an antenna (ANT2) via an impedance matching external circuit (C1-C3), and a second interface (RX1, RX2) which can be used in card mode and in reader mode and is intended to be connected to the antenna (ANT2) and to the first interface (TX1, TX2) via the impedance matching external circuit (C1-C3), **characterized in that** it further includes an internal module (MTD) comprising at least first detection means (MDT1) configured to deliver a first detection signal (SD1) which represents the phase antenna matching quality when the impedance matching external circuit (C1-C3) and the antenna (ANT2) are indeed connected between the first interface (TX1, TX2) and the second interface (RX1, RX2), the internal module (MTD) being furthermore configured to deliver a check signal (SCTRL) from at least the first detection signal (SD1).

2. NFC component according to Claim 1, wherein the first detection means (MDT1) include a generator (GEN) configured to generate, on the first interface, a first voltage signal (S1) comprising rising edges (FM), and a first processing block connected to the generator and to the second interface, in order to receive, at the second interface, a second voltage signal (S2) resulting from the generation of the first voltage signal on the first interface, and comprising elaboration means (MLB) configured to elaborate predefined time windows (FT) about the maximum values (VMX), respectively, of the second voltage signal (S2), and a first detection module configured to deliver the first detection signal having a first state when the position of a rising edge of the first voltage signal is located inside a time window.

3. NFC component according to Claim 2, wherein the elaboration means (MLB) include a rectifying module (MRDR) which is connected to the second interface and intended to deliver a second voltage rectified signal (VREC) having a voltage predefined level, and a comparator (CP1) having a first input connected to the output of the rectifying module and a second input connected to the second interface, and the detection module comprises a logic gate (PL1) having a first input connected to the output of the comparator and a second input connected to the output of the generator.

4. NFC component according to one of the preceding claims, wherein the internal module further includes second detection means (MDT2) configured to deliver a second detection signal (SD2) which represents the amplitude antenna matching quality when the impedance matching external circuit and the antenna are indeed connected between the first interface and the second interface, the internal module being furthermore configured to deliver the check signal (SCTRL) from the first detection signal (SD1) and from the second detection signal (SD2).

5. NFC component according to Claims 3 and 4, wherein the second detection means (MDT2) include a second comparator (CP2) configured to compare the value of the second rectified signal with a reference value and deliver the second detection signal having a first state if the value of the second rectified signal is greater than said reference value.

6. NFC component according to Claim 4 or 5, wherein the internal module includes output means (PL2) configured to deliver the check signal with a first state when the first detection signal and the second detection signal are both in the first state thereof.

7. NFC component according to one of the preceding claims, further including means for adjusting (MCM, CM1-CM3) said matching, which are configured to adjust the antenna matching on the basis of the check signal delivered by said internal module.

8. NFC component according to Claim 7, wherein the adjusting means comprise an internal circuit of switched capacitors (CM1-CM3), which is connected between the two interfaces and between the two terminals of the second interface, and control means (MCM) configured to control the switching of said capacitors on the basis of at least one signal from the group formed by the check signal and the two detection signals.

9. System, including a NFC component (CMP) according to one of Claims 1 to 8, an antenna connected to the second interface of the component, and an impedance matching external circuit connected to the first interface of the component as well as to the antenna.

10. Apparatus, such as a cellular mobile phone, comprising a system according to Claim 9.

11. Method of checking the matching of an antenna, connected via an impedance matching external circuit (C1-C3) to a first interface (TX1, TX2) of a NFC component which can be used in reader mode and connected to a second interface (RX1, RX2) of the NFC component which can be used in card mode and in reader mode, the method including at least a first elaboration within the NFC component of a first detection signal (DS1) representing the phase antenna matching quality and a development of a check signal (SCTRL).

12. Method according to Claim 11, wherein said first development includes generating, on the first interface, a first voltage signal (S1) comprising rising edges, receiving, at the second interface, a second voltage signal (S2) resulting from generating the first voltage signal on the first interface, and delivering the first detection signal (SD1) in a first state when the position of a rising edge of the first voltage signal is located inside a predefined time window of a maximum value of the second voltage signal.

13. Method according to Claim 11 or 12, further including a second elaboration, within the NFC component, of a second detection signal (SD2) representative of the amplitude antenna matching quality, the check signal (SCTRL) being elaborated on the basis of the first detection signal (SD1) and the second detection signal (SD2), the check signal (SCTRL) being representative of the phase and amplitude antenna matching quality.

14. Method according to Claim 13, wherein the second elaboration includes a comparison of the value of the second voltage rectified signal (VERC) with a reference value (Vref) and delivery of the second detection signal in a first state if the value of the second rectified signal is greater than said reference value.

15. Method according to one of Claims 11 to 14, further including an adjustment of said matching of the antenna on the basis of at least one signal from the group formed by the check signal and the two detection signals.

16. Method according to Claim 15, wherein said adjustment comprises switching at least one switched capacitor of an internal circuit of switched capacitors which is connected between the two interfaces and between the two terminals of the second interface of the NFC component, said switching being controlled from at least one signal from the group formed by the check signal and the two detection signals.
